# EUROPEAN PATENT APPLICATION

(11) **EP 2 339 515 A2**
(43) Date of publication of application: **29.06.2011**
(21) Application number: 10193387.7
(22) Date of filing: 01.12.2010
(51) Int. Cl.: G06Q 10/00, G06Q 50/00

(54) **Harbor berth information system**

(30) Priority: 01.12.2009 US 628298
(71) Applicant: The Boeing Company, Chicago, IL 60606-2016 (US)
(72) Inventor: Zimmer, Nico, 54344, Kenn (DE); Brown, Ross, M., Portland, OR 97221 (US)
(74) Representative: Howson, Richard G.B.

(57) **Abstract**

A method and apparatus for identifying berths for ships. Information about a ship requesting a berth from a plurality of berths in a location is obtained. Current environmental information for the location is obtained. A number of berths for the ship from the plurality of berths is identified using the information about the ship and the current environmental information for the location.

## Description

### BACKGROUND INFORMATION

### 1. Field:

The present disclosure relates generally to ships and, in particular, to berths for ships in a harbor. Still more particularly, the present disclosure relates to a method and apparatus for identifying berths for ships in a harbor.

### 2. Background:

A harbor is a place where ships may seek shelter from weather and/or load and unload cargo. A harbor may also serve as a storage place for ships. Harbors may be manmade or natural. Berths are present in a harbor. A berth is a location for mooring ships that are not at sea. Mooring a ship includes securing or fastening the ship to a fixed object.

Berths are typically used for purposes of loading and unloading cargo. Berths may be designed for general use by ships or may be designed for specific types of vessels. The size of berths also may vary. For example, a berth may vary from about five meters to about 10 meters for smaller boats and may increase to over 400 meters for tankers.

The types of berths that may be found in a harbor may include, for example, without limitation, a boat berth, a container berth, a general berth, an X-berth, a bulk berth, and/or other suitable types of berths. A container berth is a berth that is designed to handle containers that may have a standard size, such as from about 20 feet to about 40 feet. A container berth may have cranes designed to load and unload these containers. A general berth is designed to handle smaller ships with general cargo and also may have cranes. An X-berth is a berth suitable for nuclear-powered war ships. A bulk berth is a berth designed to handle bulk cargo. A bulk berth may have excavators, conveyor belts, and/or pipelines.

When a ship travels to a harbor, a harbor master and the captain of the ship talk to each other to exchange information. This exchange of information is used by the harbor master to assign a berth to the arriving ship. As the arriving ship approaches or reaches the harbor, a pilot may board the ship to aid in directing the arriving ship to the assigned berth. One challenge for a harbor master is to provide the best use for berths.

Currently, a harbor master reviews paper sea charts, a harbor book, and other sources of information. The harbor master also receives information about the ship from the captain of the ship. The information the harbor master uses may be out of date or incomplete. Additionally, the harbor master often relies on knowledge from prior selections of berths for ships and from local knowledge gathered from others who have worked as a harbor master in the harbor.

As a result, it would be advantageous to have a method and apparatus that takes into account one or more of the issues discussed above, as well as possibly other issues.

### SUMMARY

In one advantageous embodiment, a method is present for identifying berths for ships. Information about a ship requesting a berth from a plurality of berths in a location is obtained. Current environmental information for the location is obtained. A number of berths for the ship from the plurality of berths is identified using the information about the ship and the current environmental information for the location.

In another advantageous embodiment, an apparatus comprises a berth selection program and a computer system. The computer system is configured to run the berth selection program to obtain information about a ship requesting a berth from a plurality of berths in a location. The computer system is configured to obtain current environmental information for the location. The computer system is also configured to identify a number of berths for the ship from the plurality of berths using the information about the ship and the current environmental information for the location.

In yet another advantageous embodiment, a computer program product comprises a computer readable storage medium. First program code is stored on the computer readable storage medium for obtaining information about a ship requesting a berth from a plurality of berths in a location. Second program code is stored on the computer readable storage medium for obtaining current environmental information for the location. Third program code is stored on the computer readable storage medium for identifying a number of berths for the ship from the plurality of berths using the information about the ship and the current environmental information for the location. The first program code, the second program code, and the third program code are stored on the computer readable storage medium.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the advantageous embodiments are set forth in the appended claims. The advantageous embodiments, however, as well as a preferred mode of use, further objectives, and advantages thereof, will best be understood by reference to the following detailed description of an advantageous embodiment of the present disclosure when read in conjunction with the accompanying drawings, wherein:

**Figure 1** is an illustration of a berth selection environment in accordance with an advantageous embodiment;

**Figure 2** is an illustration of a berth selection environment in accordance with an advantageous embodiment;

**Figure 3** is an illustration of a data processing system in accordance with an advantageous embodiment;

**Figure 4** is an illustration of dataflow in a berth selection environment in accordance with an advantageous embodiment;

**Figure 5** is an illustration of a display of a map in accordance with an advantageous embodiment;

**Figure 6** is an illustration of a flowchart of a process for identifying berths for ships in accordance with an advantageous embodiment;

**Figure 7** is an illustration of a flowchart of a process used by a ship to obtain a berth in accordance with an advantageous embodiment;

**Figure 8** is an illustration of a flowchart of a process used to assign a berth to a ship in accordance with an advantageous embodiment; and

**Figure 9** is an illustration of a flowchart of a process for selecting a number of berths in accordance with an advantageous embodiment.

### DETAILED DESCRIPTION

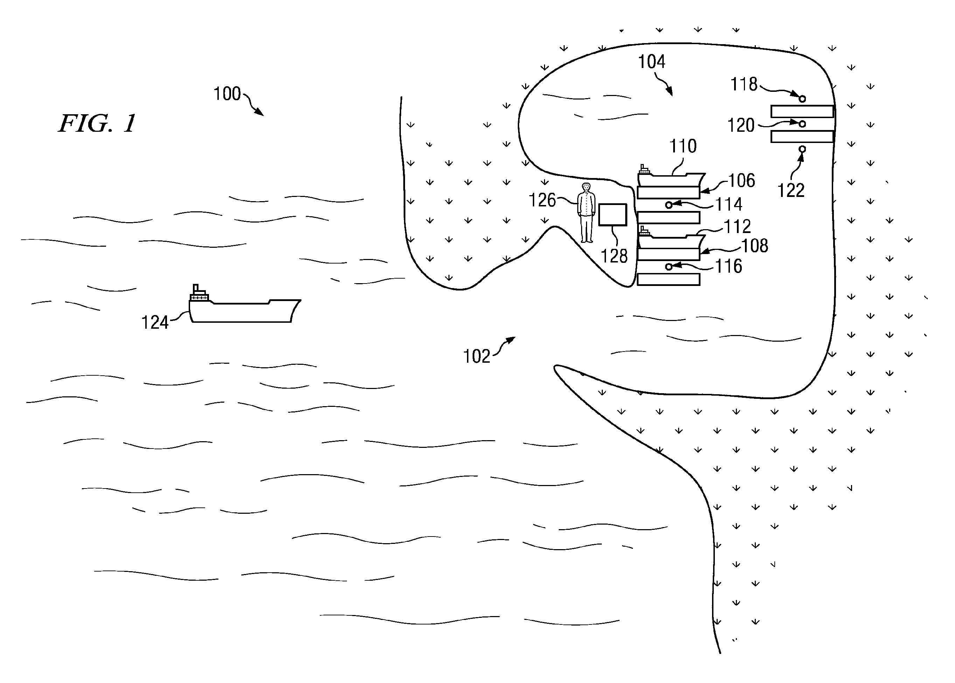

With reference now to **Figure 1****,** an illustration of a berth selection environment is depicted in accordance with an advantageous embodiment. In this illustrative example, berth selection environment **100** includes harbor **102,** which has berths **104.** In this example, berth **106** and berth **108** are occupied by ship **110** and ship **112,** respectively. Berths **114, 116, 118, 120,** and **122** are unoccupied in harbor **102.**

In this illustrative example, harbor **102** is the destination for ship **124.** Ship **124** requests a berth within berths **104** for use in mooring ship **124.** In this illustrative example, harbor master **126** uses berth information system **128** to identify a berth in berths **104** for use by ship **124.**

The different advantageous embodiments recognize and take into account a number of different considerations. For example, the different advantageous embodiments recognize and take into account that currently, harbor master **126** may have to use paper charts, weather reports, and/or communicate with the captain of ship **124** to identify a berth in berths **104** for ship **124.** The different advantageous embodiments recognize and take into account that this type of process may be time consuming and/or inaccurate, depending on the information available.

Thus, the different advantageous embodiments provide a method and apparatus for identifying berths for ships. In one advantageous embodiment, ship information is obtained for a ship requesting a berth in a plurality of berths in a berthing location, such as harbor **102.** Current environmental information is obtained for the berthing location. A number of berths are identified from the plurality of berths using the information about the ship and the current environmental information for the berthing location. The number of berths identified, in these examples, may be used by an operator assigning berths in harbor **102,** such as harbor master **126** in **Figure 1****.**

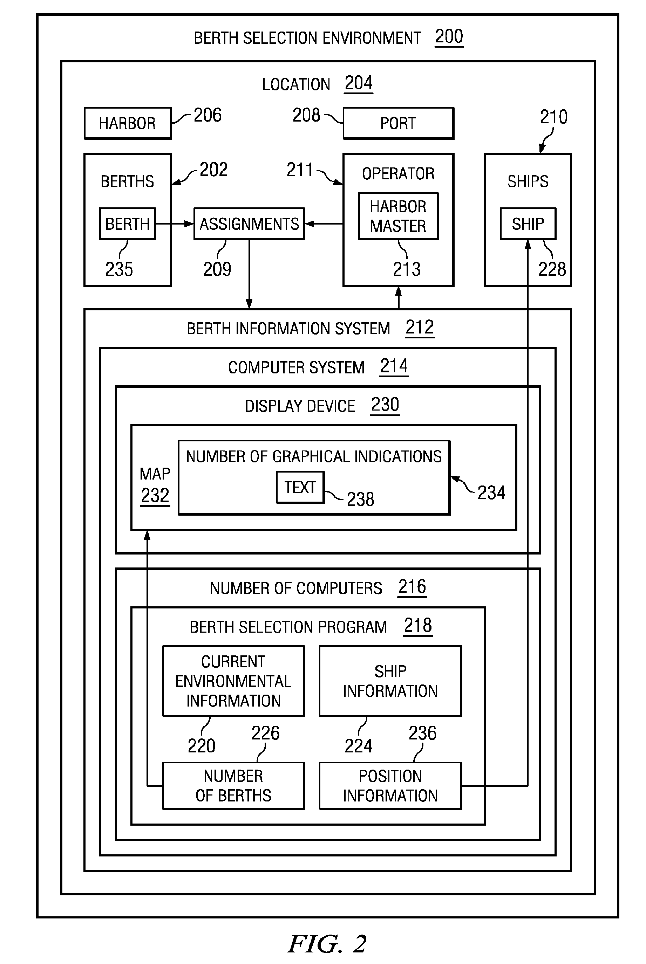

With reference now to **Figure 2****,** an illustration of a berth selection environment is depicted in accordance with an advantageous embodiment. Berth selection environment **100** in **Figure 1** is an example of one implementation of berth selection environment **200** in

### Figure 2.

In this illustrative example, berth selection environment **200** includes berths **202** at location **204.** Location **204,** in these examples, may be, for example, harbor **206** or port **208.** Harbor **206** is a location at which ships may seek shelter from weather or a location where ships may be stored. Port **208,** in these examples, is a facility on a coast or river's edge where ships can load and unload cargo.

Assignments **209** of berths **202** may be for ships 210. In these illustrative examples, assignments **209** are made using berth information system **212.** In particular, operator **211** may use the information provided by berth information system **212** to create assignments **209** for berths **202.** Operator **211** may be harbor master **213** in these examples. Berth information system **212** includes computer system **214.**

In this illustrative example, computer system **214** is at location **204.** Computer system **214** comprises number of computers **216.** Computer system **214** runs berth selection program **218.** Number of computers **216** may be in communication with each other through a number of different communications links. These communications links may take the form of a local area network, a wide area network, the Internet, or some other suitable medium.

Berth selection program **218** in berth information system **212** uses current environmental information **220** and ship information **224** to identify number of berths **226.** Number of berths **226** is an identification of one or more berths that ship **228** in ships **210** can use. In these examples, ship information **224** may be information about ship **228.**

In these illustrative examples, current environmental information **220** may be, for example, without limitation, at least one of current weather conditions, wind speed, wave height, weather forecasts, tide information, currents, dimensions of a berth, water depths within location **204,** ships currently docked at berths **202,** and/or other suitable information.

As used herein, the phrase "at least one of", when used with a list of items, means that different combinations of one or more of the listed items may be used and only one of each item in the list may be needed. For example, "at least one of item A, item B, and item C" may include, for example, without limitation, item A or item A and item B. This example also may include item A, item B, and item C, or item B and item C.

Ship information **224** includes at least one of a draft for the ship, a length of the ship, a width of the ship, a weight of the ship, a turning capability of the ship, and/or other suitable information about the ship.

When number of berths **226** is identified for ship **228,** number of berths **226** may be presented on display device **230** in computer system **214.** Location **204** with number of berths **226** may be displayed on map **232.** Location **204** also may be indicated using text **238.** Additionally, number of graphical indications **234** may be used to graphically indicate number of berths **226** on map **232.**

Map **232** may be displayed as one of a two-dimensional map and a three-dimensional map in the different advantageous embodiments. Map **232** may include different levels of detail or information. In some cases, map **232** may be in the form of a chart. Using map **232,** harbor master **213** may assign a berth within berths **202** to ship **228** using the identification of number of berths **226** in map **232.**

Text **238** is textual data displayed using number of graphical indications **234.** Text **238** may comprise both letters and numbers. In one advantageous embodiment, text **238** is a textual representation of any combination of one or more suggested berths, an assigned berth, coordinates of the suggested or assigned berths, and depths of the suggested or assigned berths in the illustrative examples.

When user input is received assigning berth **235** to ship **228,** berth **235** may be identified in assignments **209.** The selection of berth **235** may cause berth **235** to be indicated as being reserved in assignments **209.** When ship **228** reaches berth **235,** berth **235** may be marked as occupied in assignments **209.**

When berth **235** is identified in assignments **209,** position information **236** may be identified for berth **235** by berth selection program **218.** Position information **236** may include, for example, longitude, latitude, and/or other types of information. Position information **236** is sent to ship **228** for use by ship **228** in navigating to berth **235.**

In these illustrative examples, the identification of number of berths **226** on display device **230** of map **232** with number of graphical indications **234** is presented to harbor master **213,** which assigns berth **235** to ship **228** from berths **202.** Alternatively, harbor master **213** may be presented with text **238.** Text **238** includes an assignment of berth **235** to ship **228** in this example. In some advantageous embodiments, this information also may be presented to the captain of ship **228** for which berth **235** is selected.

In this manner, harbor master **213,** or some other suitable person selecting berths for a ship, may obtain an identification of berths that are suitable for a particular ship. From the identification of number of berths **226,** harbor master **213** may assign a berth to ship **228** in a more efficient and accurate manner than currently possible.

Further, berth information system **212** allows the identification of number of berths **226** for ships **210** not yet arriving at location **204** and/or arriving after ship **228.** In other words, berth information system **212** may be used to plan ahead for which berths in berths **202** may be used by ships **210.**

The illustration of berth selection environment 200 in **Figure 2** is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

For example, in some advantageous embodiments, computer system **214** may be in a location other than location **204.** In still other advantageous embodiments, computer system **214** and berth selection program **218** may be used to assign berths to other berthing locations in addition to location **204.**

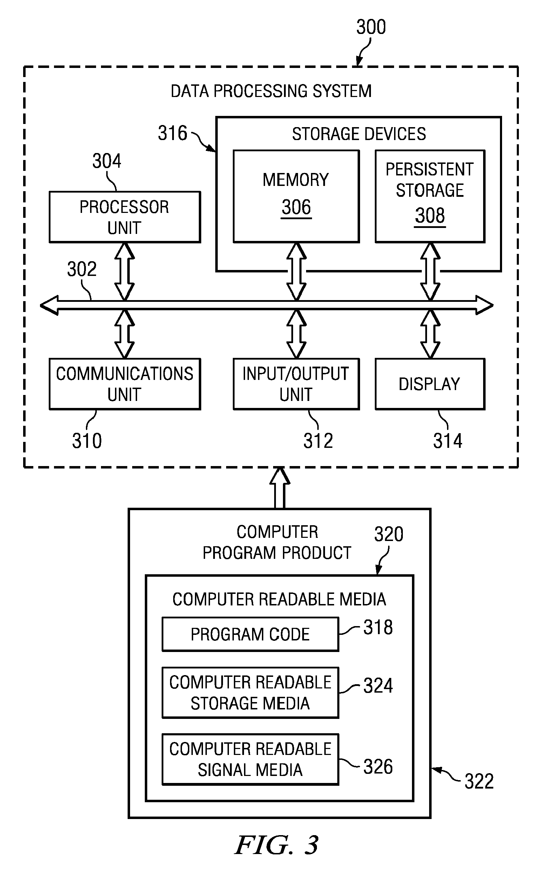

Turning now to **Figure 3****,** an illustration of a data processing system is depicted in accordance with an advantageous embodiment. Data processing system **300** may be used to implement one or more computers in computer system **214** in **Figure 2****.** Additionally, data processing system **300** may be used to implement computers located on ship **228** in **Figure 2****.**

In this illustrative example, data processing system **300** includes communications fabric **302,** which provides communications between processor unit **304,** memory **306,** persistent storage **308,** communications unit **310,** input/output (I/O) unit **312,** and display **314.**

Processor unit **304** serves to execute instructions for software that may be loaded into memory **306.** Processor unit **304** may be a set of one or more processors or may be a multi-processor core, depending on the particular implementation. Further, processor unit **304** may be implemented using one or more heterogeneous processor systems in which a main processor is present with secondary processors on a single chip. As another advantageous example, processor unit **304** may be a symmetric multi-processor system containing multiple processors of the same type.

Memory **306** and persistent storage **308** are examples of storage devices **316.** A storage device is any piece of hardware that is capable of storing information, such as, for example, without limitation, data, program code in functional form, and/or other suitable information either on a temporary basis and/or a permanent basis.

Memory **306,** in these examples, may be, for example, a random access memory or any other suitable volatile or non-volatile storage device. Persistent storage **308** may take various forms, depending on the particular implementation. For example, persistent storage **308** may contain one or more components or devices. For example, persistent storage **308** may be a hard drive, a flash memory, a rewritable optical disk, a rewritable magnetic tape, or some combination of the above. The media used by persistent storage **308** may be removable. For example, a removable hard drive may be used for persistent storage **308.**

Communications unit **310,** in these examples, provides for communication with other data processing systems or devices. In these examples, communications unit **310** is a network interface card. Communications unit **310** may provide communications through the use of either or both physical and wireless communications links.

Input/output unit **312** allows for the input and output of data with other devices that may be connected to data processing system **300.** For example, input/output unit **312** may provide a connection for user input through a keyboard, a mouse, and/or some other suitable input device. Further, input/output unit **312** may send output to a printer. Display **314** provides a mechanism to display information to a user.

Instructions for the operating system, applications, and/or programs may be located in storage devices **316,** which are in communication with processor unit **304** through communications fabric **302.** In these illustrative examples, the instructions are in a functional form on persistent storage **308.** These instructions may be loaded into memory **306** for execution by processor unit **304.** The processes of the different embodiments may be performed by processor unit **304** using computer implemented instructions, which may be located in a memory, such as memory **306.**

These instructions are referred to as program code, computer usable program code, or computer readable program code that may be read and executed by a processor in processor unit **304.** The program code, in the different embodiments, may be embodied on different physical or computer readable storage media, such as memory **306** or persistent storage **308.**

Program code **318** is located in a functional form on computer readable media **320** that is selectively removable and may be loaded onto or transferred to data processing system **300** for execution by processor unit **304.** Program code **318** and computer readable media **320** form computer program product **322.** In one example, computer readable media **320** may be computer readable storage media **324** or computer readable signal media **326.**

Computer readable storage media **324** may include, for example, an optical or magnetic disk that is inserted or placed into a drive or other device that is part of persistent storage **308** for transfer onto a storage device, such as a hard drive, that is part of persistent storage **308.** Computer readable storage media **324** also may take the form of a persistent storage, such as a hard drive, a thumb drive, or a flash memory, that is connected to data processing system **300.** In some instances, computer readable storage media **324** may not be removable from data processing system **300.**

Alternatively, program code **318** may be transferred to data processing system **300** using computer readable signal media **326.** Computer readable signal media **326** may be, for example, a propagated data signal containing program code **318.** For example, computer readable signal media **326** may be an electromagnetic signal, an optical signal, and/or any other suitable type of signal. These signals may be transmitted over communication links, such as wireless communication links, an optical fiber cable, a coaxial cable, a wire, and/or any other suitable type of communication link. In other words, the communication link and/or the connection may be physical or wireless in the illustrative examples.

In some advantageous embodiments, program code **318** may be downloaded over a network to persistent storage **308** from another device or data processing system through computer readable signal media **326** for use within data processing system **300.** For instance, program code stored in a computer readable storage media in a server data processing system may be downloaded over a network from the server to data processing system **300.** The data processing system providing program code **318** may be a server computer, a client computer, or some other device capable of storing and transmitting program code **318.**

The different components illustrated for data processing system **300** are not meant to provide architectural limitations to the manner in which different embodiments may be implemented. The different advantageous embodiments may be implemented in a data processing system including components in addition to, or in place of, those illustrated for data processing system 300.

Other components shown in **Figure 3** can be varied from the illustrative examples shown. The different embodiments may be implemented using any hardware device or system capable of executing program code. As one example, data processing system **300** may include organic components integrated with inorganic components and/or may be comprised entirely of organic components excluding a human being. For example, a storage device may be comprised of an organic semiconductor.

As another example, a storage device in data processing system **300** is any hardware apparatus that may store data. Memory **306,** persistent storage **308,** and computer readable media **320** are examples of storage devices in a tangible form.

In another example, a bus system may be used to implement communications fabric **302** and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory **306** or a cache such as found in an interface and memory controller hub that may be present in communications fabric **302.**

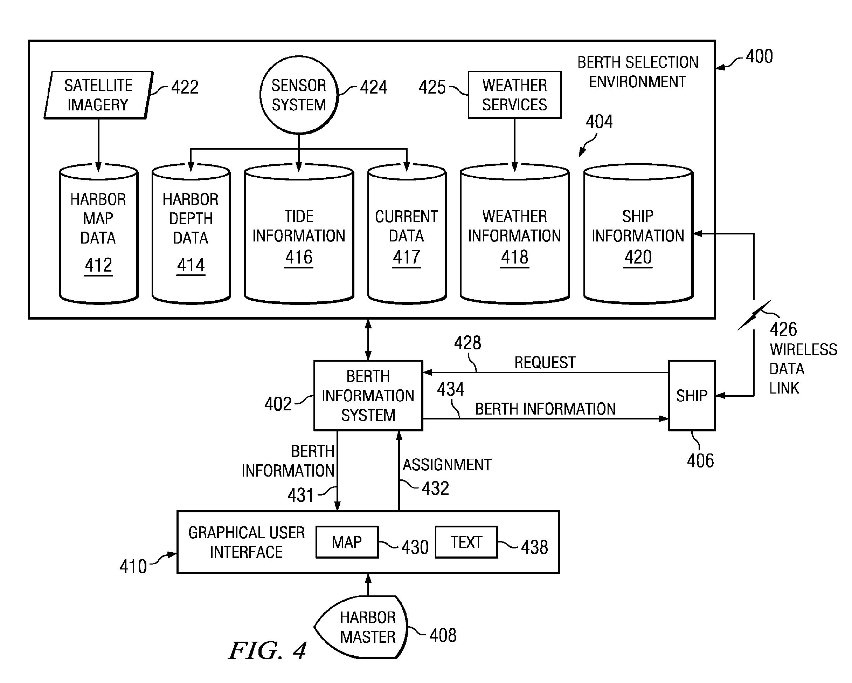

With reference now to **Figure 4****,** an illustration of a berth information system in a berth selection environment is depicted in accordance with an advantageous embodiment. In this illustrative example, berth selection environment **400** includes berth information system **402,** which may be implemented using berth information system **212** in **Figure 2****.**

As depicted, berth information system **402** receives ship information and current environmental information from sources **404.** This information is used to identify a berth for ship **406.** In these illustrative examples, berth information system **402** may be operated by harbor master **408** through graphical user interface **410.**

Sources **404** may take a number of different forms. For example, sources **404** may include information from databases located in a computer system for berth information system **402.** Sources **404** also may include information from databases in locations remote to berth information system **402.** For example, in some advantageous embodiments, information may be obtained by berth information system **212** in **Figure 2** from services that provide weather information or other current environmental information. This information may be received over a network, such as a wide area network or the Internet. In these illustrative examples, sources **404** contain information that is as up-to-date as possible.

In these examples, sources **404** include, for example, harbor map data **412,** harbor depth data **414,** tide information **416,** current data **417,** weather information **418,** and ship information **420.** In these examples, harbor map data **412,** harbor depth data **414,** tide information **416,** current data **417,** and weather information **418** are examples of current environmental information in sources **404.**

In these illustrative examples, harbor map data **412** may be obtained through satellite imagery **422.** Harbor map data **412** provides a map of a harbor. Harbor depth data **414** may be obtained through bathymetry. Bathymetry is a process used to generate information about the underwater depth of the floors of bodies of water.

Tide information **416** may be obtained from sensor system **424.** In these illustrative examples, tide information **416** includes information about tides and/or currents for the harbor. Current data **417** is information about currents within the harbor and/or in or around the berths in the harbor. Weather information **418** may be obtained from weather services **425** in these examples. Weather information **418** includes information about wind, wave heights, and/or other suitable types of weather information.

Sensor system **424** is located in the harbor in these examples. Sensor system **424** may include sensors operated by various organizations. These organizations may be, for example, an open geospatial consortium, a sensor observation service, a weather service, or some other suitable type of organization. Sensor system **424** and/or weather services **425** may provide a real-time feed of harbor depth data **414,** tide information **416,** current data **417,** and/or weather information **418,** respectively. For example, weather information **418** and tide information **416** may be received in real time. In other words, the information is received as fast as the service or source generating the information can transmit the information to berth information system **402.**

In another advantageous embodiment, sensor system **424** is located in a number of berths associated with the harbor. For example, the number of berths may be berths **114, 116, 118, 120,** and **122** in **Figure 1****.** In such an advantageous embodiment, sensor system **424** comprises a depth gauge in the number of berths. The depth gauge measures depth of the berth to provide harbor depth data **414.**

Ship information **420** may include, for example, the width of the ship, the length of the ship, and/or other suitable parameters. Ship information **420** may be updated by receiving information from ship **406** and/or other sources. In this illustrative example, ship information **420** is updated using wireless data link **426** with ship **406.** In this manner, updated information for ship **406** is present in ship information **420.** Of course, in other advantageous embodiments, ship information **420** may be obtained from a home office or back office for ship **406.**

In these illustrative examples, sources **404** may also provide predictive information to berth information system **402.** This predictive information may include information that applies to the period of time during which ship **406** will be at the berth. For example, weather information **418** may include information for the weather during the time ship **406** is at the berth. As yet another example, tide information **416** and current data **417** may include predictive information for tides and/or currents during the time ship **406** is at the berth.

In one illustrative example, ship **406** sends request **428** for a berth. In some advantageous embodiments, request **428** includes the draft for ship **406.** The draft is the distance that ship **406** extends below the water. For example, the draft of ship **406** in ship information **420** may be used to identify berths that have a sufficient amount of depth between the bottom of the ship and the bottom of the berth. Request **428** also may be transmitted using wireless data link **426** or another suitable data connection.

The draft of ship **406** may vary, depending on the load or cargo that is present on ship **406** and the proximity of ship **406** to the bottom of the water. Further, the draft of ship **406** may vary based on the driving characteristics of ship **406.** Driving characteristics are the operational conditions of the engines on ship **406.** For example, driving characteristics may be the amount of power applied to ship **406** by the engines on ship **406.** In one advantageous embodiment, the draft of ship **406** increases as power applied to ship **406** from the engines aboard ship **406** increases. Of course, in some advantageous embodiments, the draft of ship **406** also may be included in ship information **420** instead of being sent as part of request **428.**

In response to receiving request **428,** berth information system **402** uses sources **404** to identify a number of berths for use by ship **406.** Ship information **420** is used by berth information system **402** along with other information from sources **404** and the draft of ship **406** to identify a number of berths for use by ship **406.** In taking into account the draft of ship **406,** berth information system **402** may also take into account the draft that ship **406** will have when leaving the berth. For example, the draft of ship **406** may change if cargo is loaded onto ship **406** while ship **406** is in the berth. The number of berths identified may need to take into account this change in draft.

Other types of ship information that may be used include, for example, without limitation, the width and length of ship **406.** This width and length may be used to identify berths that are capable of accommodating ship **406.** The berths identified as capable of accommodating ship **406** are presented as berth information **431** on map **430** in graphical user interface **410** to harbor master **408.**

Alternatively, berth information **431** may be presented using text **438.** Text **438** may comprise both letters and numerical information. For example, text **438** may include identification and/or location information for berth information **431.**

In response, harbor master **408** makes assignment **432** to assign a berth within the number of berths to ship **406.** Assignment **432** is used by berth information system **402** to return berth information **434** to ship **406.** Berth information **434** may be, for example, an identification of a berth using latitude and longitude coordinates of the berth. Berth information **434** also may include, for example, map **430** with the assigned berth identified in map **430.** Of course, berth information **434** may comprise text **438** without map **430.** Text **438** may include identification of a berth using latitude and longitude coordinates, as well as the depth of the berth.

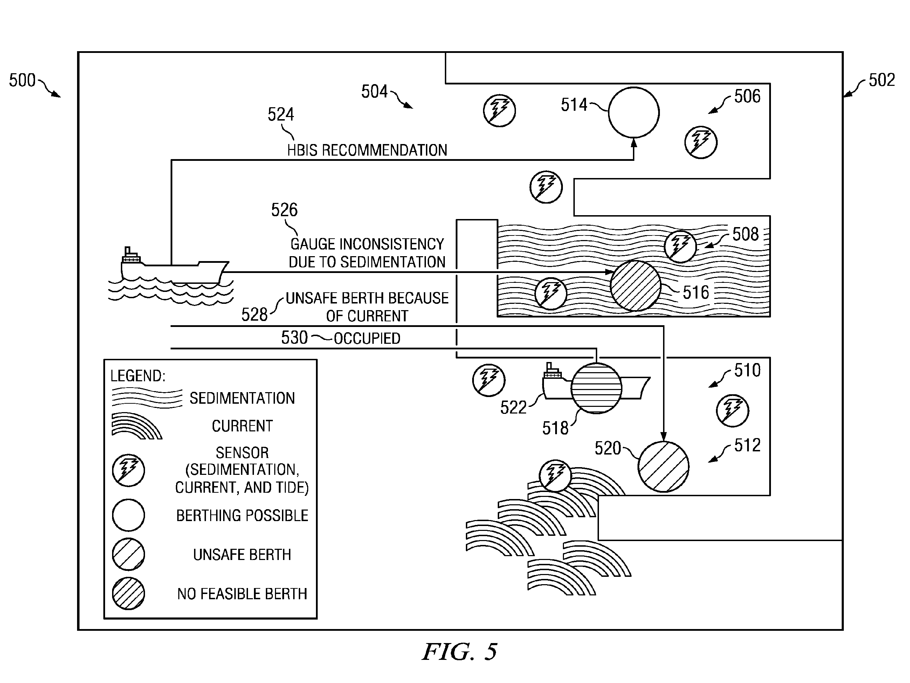

With reference now to **Figure 5****,** an illustration of a display of a map is depicted in accordance with an advantageous embodiment. In this illustrative example, map **500** is presented on display **502.** Display **502** is an example of a display that may be presented on a graphical user interface, such as, for example, graphical user interface **410** in **Figure 4****.**

In this illustrative example, berths **506, 508, 510,** and **512** for harbor **504** are displayed on map **500.** Graphical indicators **514, 516, 518,** and **520** are associated with berths **506, 508, 510,** and **512,** respectively, on map **500.**

As depicted, graphical indicator **514** identifies berth **506** as a recommended berth for a ship. Graphical indicators **516, 518,** and **520** indicate that berths **508, 510,** and **512,** respectively, should not be assigned.

For example, graphical indicator **518** indicates that berth **510** is not a feasible berth. In this example, ship **522** is already located at berth **510.** Further, graphical indicator **516** indicates that berth **508** is not a suitable berth. Graphical indicator **520** also indicates that berth **512** is not a suitable berth.

In this illustrative example, additional information may be presented on display **502.** For example, text box **524** identifies berth **506** as a recommended berth. Text box **526** states that berth **508** is not suggested because an inconsistency is detected in the depth gauge. The inconsistency in the depth gauge may provide an inaccurate representation of the depth of berth **508.** Therefore, berth **508** is not suggested for the ship. Text box **528** indicates that berth **512** should not be used because of current conditions. Additionally, text box **530** indicates that berth **510** is occupied. This type of textual information provides additional explanations in addition to the graphical indicators identifying a suitable berth for the ship.

The illustration of map **500** and display **502** in **Figure 5** is not meant to imply physical or architectural limitations to the manner in which other advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

For example, in some advantageous embodiments, textual information may be omitted and only graphical indicators may be present. In yet other advantageous embodiments, the graphical indicators may be overlaid on an actual image of the harbor and the berths. In still other advantageous embodiments, only portions of the harbor may be shown or some of the berths which are present. In still other advantageous embodiments, position information of the berths also may be presented on map **500.**

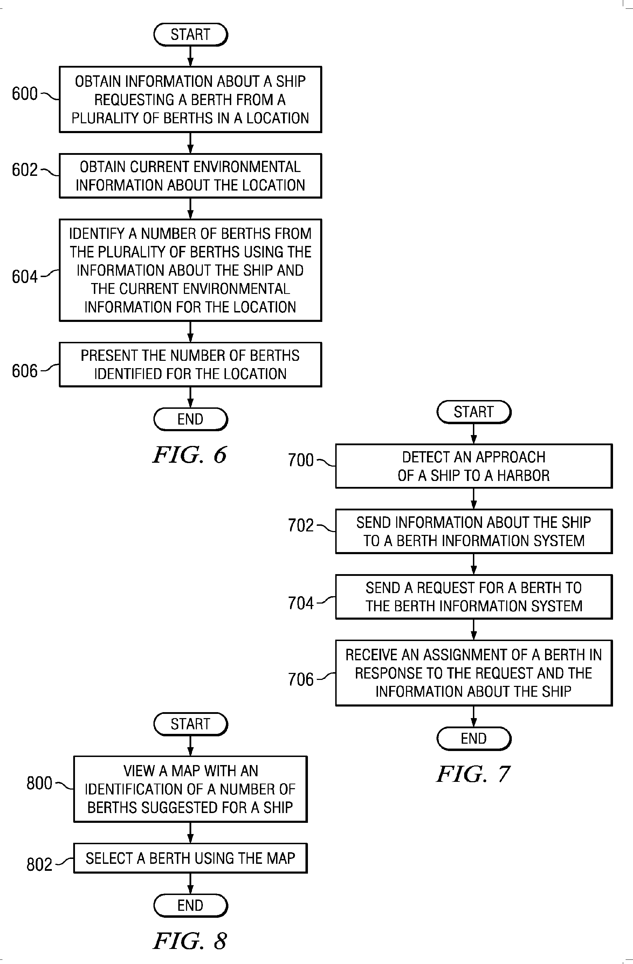

With reference now to **Figure 6****,** an illustration of a flowchart of a process for identifying berths for ships is depicted in accordance with an advantageous embodiment. The process illustrated in **Figure 6** may be implemented in a berth selection environment, such as berth selection environment **200** in **Figure 2****.** In these illustrative examples, the processes may be part of a program, such as berth selection program **218** in **Figure 2****.**

The process begins by obtaining information about a ship requesting a berth from a plurality of berths in a location (operation **600**). This location may be, for example, a harbor or a port. Next, current environmental information about the location is obtained (operation **602**). This current environmental information may include at least one of current weather conditions, wind speed, wave heights, currents, weather forecasts, tide information, dimensions for the plurality of berths, water depths for the location, water depths for the plurality of berths, occupied berths in the plurality of berths, and/or other suitable information.

The information in operations **600** and **602** may be obtained in a number of different ways. For example, the information may be obtained by requests made by the process. In other advantageous embodiments, the information may be pushed or sent to the process.

The process identifies a number of berths from the plurality of berths using the information about the ship and the current environmental information for the location (operation **604**). The process then presents the number of berths identified for the location (operation 606), with the process terminating thereafter. In these illustrative examples, in operation **606,** the number of berths identified may be presented by presenting an identification of the number of berths on a display device, such as display device **230** in **Figure 2****.**

With reference now to **Figure 7****,** an illustration of a flowchart of a process used by a ship to obtain a berth is depicted in accordance with an advantageous embodiment. The process illustrated in **Figure 7** may be implemented in a computer system on a ship, such as, for example, ship **228** in **Figure 2****.** The information about the ship may be automatically transmitted from the computer system on the ship using a wireless communications link when the ship is within the selected distance of the harbor.

The process may begin by detecting an approach of a ship to a harbor (operation **700**). In this example, the ship may be considered to be approaching the harbor when the ship is within some selected distance of the harbor. The position of the ship may be obtained from a global positioning system device on the ship in these illustrative examples. The process sends information about the ship to a berth information system (operation **702**). In operation **702,** the information about the ship may be, for example, parameters about the ship. These parameters may include at least one of a draft for the ship, a draft of the ship, a turning capability of the ship, a width of the ship, a length of the ship, and/or other suitable information.

In some illustrative examples, at least a portion of the information about the ship is sent to the berth information system using a number of sensors for the ship. For example, the draft of the ship may be sent from draft sensors for the ship.

The process sends a request for a berth to the berth information system (operation **704**). In these illustrative examples, operations **702** and **704** may be performed automatically by the computer system on the ship and/or a number of sensors for the ship without user input.

An assignment of a berth is received in response to the request and the information about the ship (operation **706**), with the process terminating thereafter. The assignment may take the form of berth information, such as berth information **434** in **Figure 4****.** This berth information may be an identification of the berth. The identification of the berth may include coordinates, such as a latitude and a longitude, of the berth assigned to the ship. The identification may be graphically indicated on a map or presented in some other manner using some other suitable identifier. With the assignment information, a course may be plotted or generated for the ship to reach the berth assigned to the ship.

Turning now to **Figure 8****,** an illustration of a flowchart of a process used to assign a berth to a ship is depicted in accordance with an advantageous embodiment. The process illustrated in **Figure 8** may be implemented in an environment, such as berth selection environment **100** in **Figure 1** or berth selection environment **200** in **Figure 2****.** This process may be implemented by a harbor master or other person assigning berths to ships using a computer system.

The process begins by viewing a map with an identification of a number of berths suggested for a ship (operation **800**). In this illustrative example, operation **800** may be initiated in response to a request for a berth sent by a ship. In operation **800,** a harbor master or other operator may view assignments identified for one or more ships requesting a berth at the harbor. Also, this operation may be performed periodically, rather than in response to a request for a berth by a ship.

A selection of a berth is made using the map (operation **802**), with the process terminating thereafter. Operation **802** may be performed by the harbor master or other operator selecting a berth from a map displaying available berths.

As seen in this example, the harbor master does not need to refer to charts, talk to the captain or other operators on the ship, or view various sources of information to identify a berth for the ship. Instead, the harbor master is able to view a map of the harbor with a number of suggested berths for the ship. Based on these suggested berths for the ship, the harbor master may select a berth for the ship more quickly than with current processes.

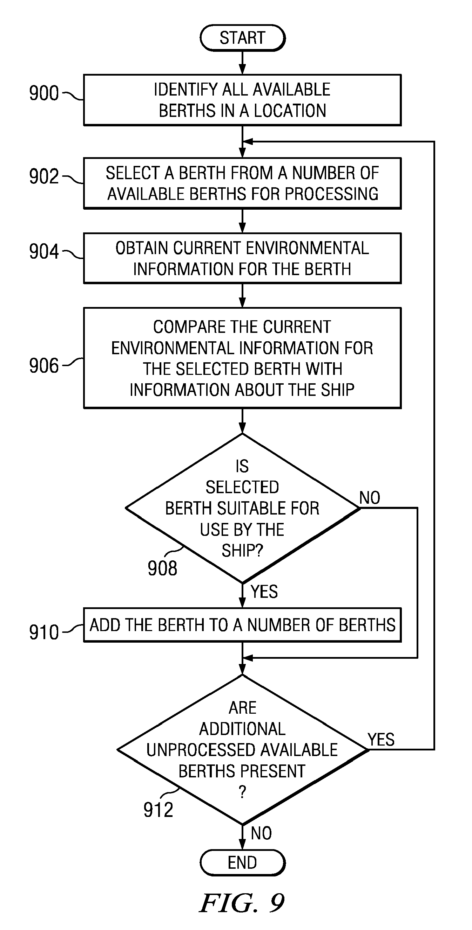

Turning now to **Figure 9****,** an illustration of a flowchart of a process for identifying a number of berths is depicted in accordance with an advantageous embodiment. This process may be a more-detailed illustration of one implementation for operation **604** in

### Figure 6.

The process begins by identifying all available berths in a location (operation **900**). Operation **900** may be performed with reference to assignments of berths already made for ships. These assignments may include berths reserved for ships and berths currently occupied by ships. In the illustrative examples, a berth is considered to be available if the berth is not occupied or a reservation or assignment of a berth has not already been made.

Thereafter, a berth is selected from a number of available berths for processing (operation **902**). The process then obtains current environmental information for the berth (operation **904**). This current environmental information may include, for example, without limitation, dimensions of the berth, the depth of water for the berth, the depth of water in a channel or route to the berth, and/or other suitable information.

The current environmental information for the selected berth is compared with information about the ship (operation **906**). This information about the ship may include various parameters, such as, for example, the draft, the length, the width, and/or other suitable parameters for the ship for the berth. Additionally, the parameters also may include whether special equipment or cranes are needed at a particular berth. Further, information about the ship also may include a constraint or a service agreement for the ship. For example, some number of berths may be available only to certain ships based on contracts or service agreements with a particular company or organization.

A determination is made as to whether the selected berth is suitable for use by the ship (operation **908**). In these examples, the selected berth is suitable for use by the ship if the comparison of the information about the ship and the current environmental information for the berth in operation **906** results in an identification that the ship can be moored at the berth. This determination takes into account weather, currents, tide information, and/or other current environmental information. If the berth is suitable, the berth is added to a number of berths (operation **910**). This number of berths may be the berths to be suggested for the ship.

Thereafter, a determination is made as to whether additional unprocessed available berths are present (operation **912**). If additional unprocessed available berths are present, the process returns to operation **902** to identify whether any more berths may be added to the number of berths. Otherwise, the process terminates. With reference again to operation **908,** if the selected berth is not suitable for use by the ship, the process proceeds to operation **912** as described above.

At this point, a number of berths have been identified for use by the ship. These identifications of the berths may be used by the harbor master to make an assignment to the ship requesting a berth. In this illustrative example, if the process terminates without identifying a number of berths for the ship, the process may, for example, begin again upon receiving a request from the ship or upon the elapsing of some period of time.

The flowcharts and block diagrams in the different depicted embodiments illustrate the architecture, functionality, and operation of some possible implementations of apparatus and methods in different advantageous embodiments. In this regard, each block in the flowcharts or block diagrams may represent a module, segment, function, and/or a portion of an operation or step. In some alternative implementations, the function or functions noted in the block may occur out of the order noted in the figures.

For example, in some cases, two blocks shown in succession may be executed substantially concurrently, or the blocks may sometimes be executed in the reverse order, depending upon the functionality involved. Also, other blocks may be added in addition to the illustrated blocks in a flowchart or block diagram.

In this manner, one or more advantageous embodiments provide a method and apparatus for identifying berths. Information about a ship requesting a berth from a plurality of berths in a location is obtained. Current environmental information for the location also is obtained. A number of berths is identified from the plurality of berths using the information about the ship and the current environmental information for the location. Additionally, the different advantageous embodiments reduce errors that may have been made through voice communications with a ship's captain or other operator, outdated information, and/or other sources of error.

The different advantageous embodiments can take the form of an entirely hardware embodiment, an entirely software embodiment, or an embodiment containing both hardware and software elements. Some embodiments are implemented in software, which includes, but is not limited to, forms, such as, for example, firmware, resident software, and microcode.

Furthermore, the different embodiments can take the form of a computer program product accessible from a computer-usable or computer-readable medium providing program code for use by or in connection with a computer or any device or system that executes instructions. For the purposes of this disclosure, a computer-usable or computer-readable medium can generally be any tangible apparatus that can contain, store, communicate, propagate, or transport the program for use by or in connection with the instruction execution system, apparatus, or device.

The computer-usable or computer-readable medium can be, for example, without limitation, an electronic, magnetic, optical, electromagnetic, infrared, or semiconductor system, or a propagation medium. Nonlimiting examples of a computer-readable medium include a semiconductor or solid state memory, magnetic tape, a removable computer diskette, a random access memory (RAM), a read-only memory (ROM), a rigid magnetic disk, and an optical disk. Optical disks may include compact disk - read only memory (CD-ROM), compact disk - read/write (CD-R/W), and DVD.

Further, a computer-usable or computer-readable medium may contain or store a computer-readable or usable program code such that when the computer-readable or usable program code is executed on a computer, the execution of this computer-readable or usable program code causes the computer to transmit another computer-readable or usable program code over a communications link. This communications link may use a medium that is, for example, without limitation, physical or wireless.

A data processing system suitable for storing and/or executing computer-readable or computer-usable program code will include one or more processors coupled directly or indirectly to memory elements through a communications fabric, such as a system bus. The memory elements may include local memory employed during actual execution of the program code, bulk storage, and cache memories which provide temporary storage of at least some computer-readable or computer-usable program code to reduce the number of times code may be retrieved from bulk storage during execution of the code.

Input/output or I/O devices can be coupled to the system either directly or through intervening I/O controllers. These devices may include, for example, without limitation, keyboards, touch screen displays, and pointing devices. Different communications adapters may also be coupled to the system to enable the data processing system to become coupled to other data processing systems or remote printers or storage devices through intervening private or public networks. Nonlimiting examples are modems and network adapters and are just a few of the currently available types of communications adapters.

The description of the different advantageous embodiments has been presented for purposes of illustration and description, and it is not intended to be exhaustive or limited to the embodiments in the form disclosed. Many modifications and variations will be apparent to those of ordinary skill in the art. Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

In a further embodiment, there is provided an apparatus comprising:
a berth selection program; and
a computer system configured to run the berth selection program to obtain information about a ship requesting a berth from a plurality of berths in a location; obtain current environmental information for the location; and identify a number of berths for the ship from the plurality of berths using the information about the ship and the current environmental information for the location.

Optionally, the computer system is further configured to run the berth selection program to receive a selection of the berth for the ship from the number of berths.

Optionally, in obtaining the information about the ship requesting the berth from the plurality of berths in the location, the computer system is configured to run the berth selection program to receive an identification of the ship; and obtain the information about the ship from a ship database using the identification of the ship.

Optionally, in obtaining the information about the ship requesting the berth from the plurality of berths in the location, the computer system is configured to receive the information about the ship from a source selected from at least one of a number of sensors for the ship and a computer system on the ship.

Optionally, the computer system is further configured to run the berth selection program to present an identification of the number of berths on a display device.

Optionally, in presenting the identification of the number of berths on the display device, the computer system is configured to run the berth selection program to display a map of the location on the map; and graphically indicate the number of berths in the location on the map.

Optionally, the map is displayed as one of a two-dimensional map and a three-dimensional map.

Optionally, the computer system is further configured to run the berth selection program to identify constraints on the plurality of berths available based on a service agreement for the ship and wherein in identifying the number of berths from the plurality of berths using the information about the ship and the current environmental information for the location, the computer system is configured to identify the number of berths from the plurality of berths using the information about the ship, the current environmental information for the location, and the service agreement for the ship.

Optionally, the information about the ship comprises at least one of a draft for the ship, a length of the ship, a width of the ship, a draft of the ship, a turning capability of the ship, and a weight of the ship.

Optionally, the current environmental information for the location comprises at least one of current weather conditions, wind speed, wave heights, currents, weather forecasts, tide information, dimensions of the plurality of berths, water depths for locations within the location, water depths for the plurality of berths, and occupied berths in the plurality of berths.

Optionally, the location is selected from one of a harbor and a port.

Optionally, the number of sensors is located on the ship and the computer system is located on the ship.

In another embodiment, there is provided a computer program product comprising:
a computer readable storage medium;
first program code, stored on the computer readable storage medium, for obtaining information about a ship requesting a berth from a plurality of berths in a location;
second program code, stored on the computer readable storage medium, for obtaining current environmental information for the location; and
third program code, stored on the computer readable storage medium, for identifying a number of berths for the ship from the plurality of berths using the information about the ship and the current environmental information for the location, wherein the first program code, the second program code, and the third program code are stored on the computer readable storage medium.

Optionally, the computer program product further comprises:
fourth program code for presenting an identification of the number of berths on a display device.

Optionally, the computer program product further comprises:
fourth program code for displaying a map of the location on the map and graphically indicating the number of berths in the location on the map, wherein the fourth program code is stored on the computer readable storage medium.

Optionally, the computer program product further comprises:
fourth program code for identifying constraints on the plurality of berths available based on a service agreement for the ship, wherein the fourth program code is stored on the computer readable storage medium and wherein the third program code for identifying the number of berths for the ship from the plurality of berths using the information about the ship and the current environmental information for the location comprises program code for identifying the number of berths for the ship from the plurality of berths using the information about the ship, the current environmental information for the location, and the service agreement for the ship.

## Claims

1. A method for identifying berths for ships, the method comprising a computer system performing the steps of:
obtaining information about a ship requesting a berth from a plurality of berths in a location;
obtaining current environmental information for the location; and
identifying a number of berths for the ship from the plurality of berths using the information about the ship and the current environmental information for the location.

2. The method of claim 1 further comprising:
selecting the berth for the ship from the number of berths.

3. The method of claim 1, wherein the step of obtaining the information about the ship requesting the berth from the plurality of berths in the location comprises:
receiving an identification of the ship; and
obtaining the information about the ship from a ship database using the identification of the ship.

4. The method of claim 1, wherein the step of obtaining the information about the ship requesting the berth from the plurality of berths in the location comprises:
receiving the information about the ship from a source selected from a number of sensors associated with the ship and a computer system associated with the ship.

5. The method of claim 1 further comprising:
presenting an identification of the number of berths on a display device.

6. The method of claim 5, wherein the step of presenting the identification of the number of berths on the display device comprises:
displaying a map of the location on the map; and
graphically indicating the number of berths in the location on the map.

7. The method of claim 6, wherein the map is displayed as one of a two-dimensional map and a three-dimensional map.

8. The method of claim 1 further comprising:
identifying constraints on the plurality of berths available based on a service agreement for the ship; and wherein the step of identifying the number of berths for the ship from the plurality of berths using the information about the ship and the current environmental information for the location comprises:
identifying the number of berths for the ship from the plurality of berths using the information about the ship, the current environmental information for the location, and the service agreement for the ship.

9. The method of claim 2 further comprising:
responsive to a selection of the berth, sending a location of the berth to the ship.

10. The method of claim 1, wherein the information about the ship comprises at least one of a draft for the ship, a length of the ship, a width of the ship, a draft of the ship, a turning capability of the ship, and a weight of the ship.

11. The method of claim 1, wherein the current environmental information for the location comprises at least one of current weather conditions, wind speed, wave heights, currents, weather forecasts, tide information, dimensions of the plurality of berths, water depths for locations within the location, water depths for the plurality of berths, and occupied berths in the plurality of berths.

12. The method of claim 1, wherein the location is selected from one of a harbor and a port.

13. The method of claim 4, wherein the number of sensors is located on the ship and the computer system is located on the ship.

14. A computer system programmed and operable to carry out a method according to any preceding claim.

15. A computer program or a record carrier carrying a record of a computer program comprising code portions executable by a computer system to cause that system to carry out a method according to any one of claims 1 to 13.
